Europäisches Patentamt

European Patent Office

Office européen des brevets

(19)

(11) Veröffentlichungsnummer: **0 266 720**
**A2**

(12) # EUROPÄISCHE PATENTANMELDUNG

(21) Anmeldenummer: 87116076.8

(22) Anmeldetag: 02.11.87

(51) Int. Cl.4: **F16L 11/00** , **F16L 11/16** ,
**B29C 53/58**

(30) Priorität: **07.11.86 CH 4441/86**

(43) Veröffentlichungstag der Anmeldung:
**11.05.88 Patentblatt 88/19**

(84) Benannte Vertragsstaaten:
**AT BE CH DE ES FR GB GR IT LI NL SE**

(71) Anmelder: **AMETEX AG**
**Eternitstrasse 3**
**CH-8867 Niederurnen(CH)**

(72) Erfinder: **Keldany, Rachid**
**Im Aeglisten 3**
**CH-8124 Maur(DE)**
Erfinder: **Shaw, Keith James**
**Leutschenstrasse 29**
**CH-8807 Freienbach(DE)**

(74) Vertreter: **Scheidegger, Zwicky, Werner & Co.**
**Stampfenbachstrasse 48 Postfach**
**CH-8023 Zürich(CH)**

(54) **Kunststoffrohr, Verfahren und Vorrichtung zu dessen Herstellung.**

(57) Das Kunststoffrohr ist aus einem Band (1) mit parallelen Seitenkanten und wenigstens einer Aussenrippe (28) gebildet und weist entlang dieser Kanten nach aussen abstehende, jeweils einen Endwulst aufweisende Flanschen (29, 29a) auf. Ein U-förmiges Verschlussband (19) übergreift mit seinen Schenkeln diese Flanschen (29, 29a) klammerartig, um das Rohr in seiner Form zu halten. Die Schenkel des Verschlussbandes (19) weisen seitwärts abstehende elastische Lappen (19a) auf, welche an Schultern der Kopfflansche (26, 26a) der Rippe (28) zur Anlage gelangen, um das Verschlussband unter allen Betriebsbedingungen in Wirklage zu halten.

Das Rohr wird durch wendelförmiges Wickeln eines Bandes auf der Innenseite einer Wickeltrommel gebildet, wobei die Nahtstelle zwischen aneinanderstossenden Bandkanten mittels eines Verschlussbandes geschlossen wird, und das Verschlussband in seiner Wirklage gesichert wird.

Eine zur Bildung des Rohres geeignete Vorrichtung weist eine stationäre Wickeltrommel, Antriebs- bzw. Zuführmittel für das Band auf die Innenseite der Trommel sowie Verschliessmittel für die Naht auf.

Fig.5

26a 28a 19a 29a 19 29 19a 28 26

32a 31a 27a 25a 30 18 25 27 31 32

## Kunststoffrohr, Verfahren und Vorrichtung zu dessen Herstellung

Die vorliegende Erfindung betrifft ein gewickeltes Kunststoffrohr sowie ein Verfahren und eine Vorrichtung zu seiner Herstellung.

Insbesondere betrifft die Erfindung ein Kunststoffrohr, vorzugsweise aus thermoplastischem Material, mit einer schraubenlinienförmig verlaufenden Naht, das aus einem Band mit parallelen Seitenkanten gebildet ist, wobei das Band entlang der Seitenkanten nach aussen abstehende, jeweils einen Endwulst aufweisende Flanschen aufweist und ein U-förmiges Verschlussband die Wulste von zwei aneinander anliegenden Flanschen mit seinen beiden Schenkeln von aussen klammerartig übergreift, um das Rohr in seiner Form zu halten, und wobei auf der Bandaussenfläche wenigstens eine weitere längsverlaufende Rippe vorgesehen ist.

Derartige, vorzugsweise an Ort und Stelle hergestellte gewickelte Rohre werden u.a. zur Renovation von beschädigten Rohrleitungen eingesetzt. Ein solches Rohr wird zu diesem Zweck vorzugsweise in situ erzeugt und gleichzeitig in die zu reparierende Leitung vorgetrieben.

Es ist bekannt, derartige Kunststoffrohre zu wickeln und die entlang der schraubenlinienförmig verlaufenden Naht aneinanderstossenden Bandseitenkanten zu verschweissen oder zu verkleben. Andere Konstruktionen sind bekannt, bei denen die eine Bandkante einen Wulst und die andere eine entsprechende Nut aufweist, was ein Verschliessen der Naht erlaubt. Schliesslich ist aus der DE-PS 1 281 757 eine Rohrkonstruktion bekannt, bei welcher über die an den Seitenkanten des Bandes nach aussen abstehenden, jeweils einen Endwulst aufweisenden Flanschen ein U-förmiges Verschlussband gelegt wird, welches mit seinen beiden Schenkeln die aneinander anliegenden Flanschen von aussen klammerartig übergreift.

Auch bei dieser Lösung werden die aneinanderstossenden Bandflanschen miteinander verklebt oder verschweisst und das Verschlussband, das für sich allein keine sichere Verbindung gewährleistet, dient lediglich einer zusätzlichen mechanischen Sicherung der Verbindung.

Zweck der vorliegenden Erfindung ist es nun, ein gewickeltes Kunststoffrohr zu schaffen, dessen Naht allein durch einen einfachen und einfach anzubringenden mechanischen Verschluss geschlossen werden kann, welcher die Verbindung unter den vorkommenden Betriebsbedingungen gewährleistet.

Diese Aufgabe wird bei einem gewickelten Kunststoffrohr der eingangs definierten Art erfindungsgemäss dadurch gelöst, dass entlang der beiden Schenkel des Verschlussbandes seitwärts abstehende elastische Lappen vorgesehen sind, welche mit Anschlägen an den Seitenflanken der jeweils benachbarten Bandrippe zur Anlage gelangen und damit das Verschlussband in Wirklage halten.

Das eigentliche Band und das Verschlussband bestehen vorzugsweise aus thermoplastischem Material, was durch thermische Vorbehandlung (Erwärmen während des Wickelverfahrens) eine Verbesserung der mechanischen Eigenschaften ermöglicht.

Die Bandrippen weisen vorzugsweise einen äusseren Endflansch bzw. eine Verbreiterung auf, so dass die Seitenlappen des Verschlussbandes unter dieser Verbreiterung zur Anlage gelangen kann.

Das Verschlussband ist im Prinzip zwischen zwei parallel zur Naht verlaufenden Rippen gefangen und wird dadurch in der die Bandflanschen umklammernden Wirklage gehalten.

Die von den freien Enden der Schenkel oder aus deren Seitenflanken nach aussen abstehenden Seitenlappen bilden ein durchgehendes oder unterbrochenes Band und sind vorzugsweise in einem Winkel nach aussen (d.h. nach oben) geneigt.

Zwischen aneinandergrenzenden Bandflanschen kann ein vorzugsweise elastomeres Dichtungsband angeordnet sein, von dem wenigstens Teile in sich direkt gegenüberliegenden Nuten der Bandflanschen verlaufen.

Ebenfalls Gegenstand der Erfindung ist ein Verfahren zur Herstellung des erfindungsgemässen Kunststoffrohres, welches sich dadurch auszeichnet, dass ein mit mindestens einer längsverlaufenden Aussenrippe versehenes Band, an dessen parallelen Seitenkanten nach aussen abstehende, jeweils einen Endwulst aufweisende Flanschen vorgesehen sind, wendelförmig in Rohrform gewickelt wird, wobei die auf dem gewünschten Rohrdurchmesser an der Nahtstelle aneinanderstossenden Bandkanten gleichzeitig miteinander verbunden werden, indem von aussen ein U-förmiges Verschlussband über die Endwulste der Bandflanschen gelegt wird, um letztere klammerartig zu übergreifen und das Verschlussband mit seitwärts von seinen Schenkeln abstehenden Lappen gleichzeitig in den Seitenflanken der angreifenden Bandrippe so zum Eingriff gebracht wird, dass der klammerartige Verschluss in Wirklage verbleibt.

Die bei der Rohrherstellung verwendeten Bandmaterialien, mit Ausnahme des gegebenenfalls verwendeten Dichtungsbandes, bestehen vorzugsweise aus thermoplastischem Material, dessen Materialeigenschaften, insbesondere Elastizität bzw. Steifigkeit, durch eine Erwärmung unmittelbar vor und/oder während des Wickelvorgangs, verändert werden können, um durch eine momentane Reduktion der Steifigkeit einen besseren Wickelvorgang zu ermöglichen.

Ein weiterer Gegenstand der Erfindung besteht in einer zur Durchführung des Verfahrens geeigneten Vorrichtung, die sich auszeichnet durch eine stationäre Wickeltrommel, Zuführ- und Antriebsmitteln, um Bandmaterial unter einem bestimmten Winkel mit Bezug auf die Trommellängsachse auf die Innenseite der Wickeltrommel zu führen, sowie durch Mittel, um ein Nahtverschlussband und gegebenenfalls ein Dichtungsband über die Bandflanschen bzw. zwischen diese zu legen.

Bei dieser Vorrichtung ist die Wickeltrommel vorzugsweise auf einfache Weise gegen Trommeln mit verschiedenen Durchmessern austauschbar ausgebildet, damit Rohre mit verschiedenen, den Bedürfnissen angepassten Durchmessern hergestellt werden können.

Der Wickeltrommel kann eine Einrichtung zum Vorerwärmen des profilierten Bandes unmittelbar vorgeschaltet sein.

Die Wickeltrommel, auf deren Innenseite das Rohr gewickelt wird, besteht vorzugsweise aus einem gelochten, in Austrittsrichtung sich leicht konisch öffnenden Zylinder, dessen innere Oberfläche mit einem Gleitbelag, z.B. Teflon, beschichtet sein kann. Diese Trommel kann von einem Mantel umgeben sein, so dass in den Spaltraum zwischen Mantel und eigentlicher Trommel ein Heizmedium, z.B. Heissluft, eingebracht werden kann, um die Trommel und damit das Bandmaterial zu erwärmen. Die Löcher in der Trommel werden vom gewickelten Band, d.h. dem gebildeten Rohr verschlossen.

Die Erfindung wird nachstehend anhand von in der Zeichnung dargestellten Ausführungsbeispielen noch etwas näher erläutert. In der Zeichnung zeigt:

Fig. 1 eine rein schematische Darstellung einer Vorrichtung zum Wickeln eines Kunststoffrohres;

Fig. 2 ebenfalls rein schematisch ein Detail der Vorrichtung, mit der Zuführ- und Anpresseinrichtung der Bänder in die Wickeltrommel;

Fig. 3 eine schematische Ansicht der Bildung des gewickelten Rohres;

Fig. 4 die Zufuhr des Verschlussbandes und der elastomeren Dichtung in der Wickelvorrichtung nach Fig. 1;

Fig. 5 einen Schnitt durch die Nahtverbindungsstelle bei einem gewickelten Kunststoffrohr nach der Erfindung;

Fig. 5a-5c Varianten der Nahtverbindung nach Fig. 5;

Fig. 6 und 7, rein schematisch, die Anordnung von Führungs-bzw. Rückhaltebolzen, welche zur Aufnahme von auf das in Bildung begriffene Rohr wirkenden Axialkräften zwischen die Aussenrippen des Rohres eingreifen können; und

Fig. 8 eine weitere Variante der Nahtverbindungsstelle, im Schnitt, bei einem gewickelten Kunststoffrohr.

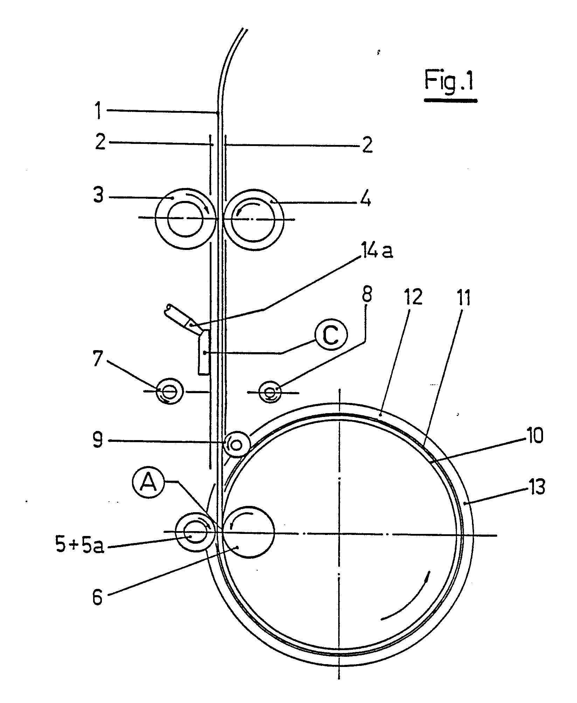

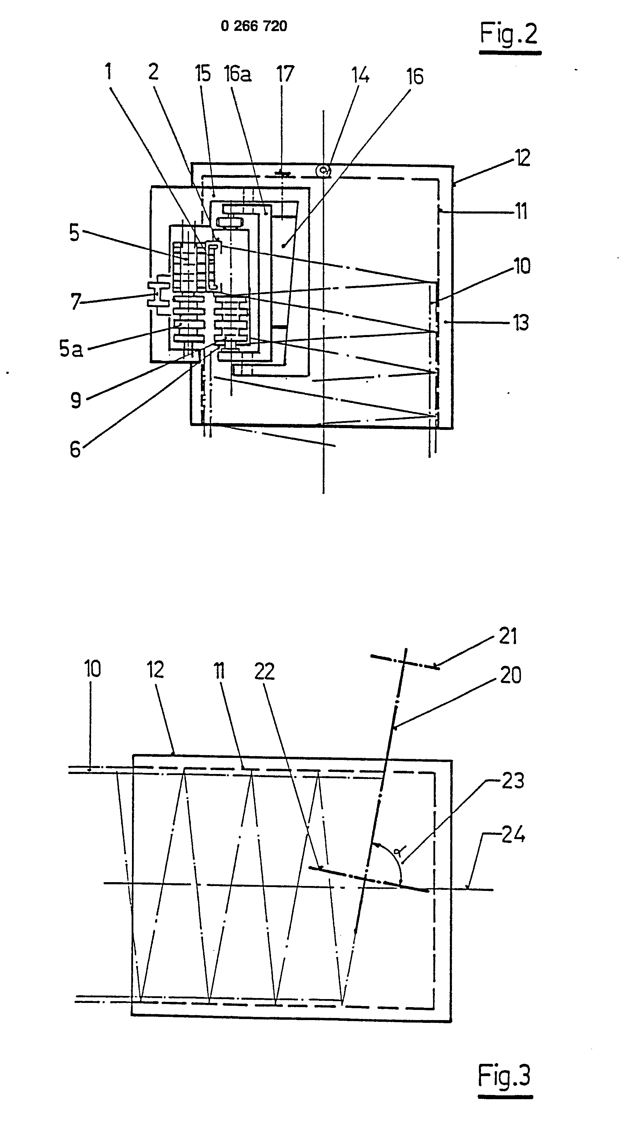

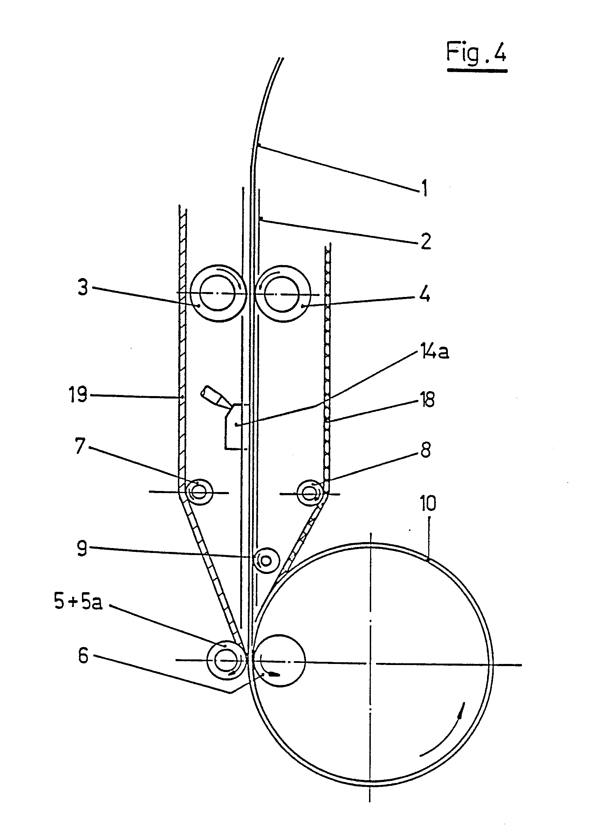

Fig. 1-4 der Zeichnung zeigen rein schematisch anhand einer entsprechenden Vorrichtung die Herstellung eines erfindungsgemäss gewickelten Rohres. Das Rohr wird im wesentlichen aus einem profilierten Band 1 aus thermoplastischem Material, nachträglich Profil 1 genannt, einem Verschlussband 19, ebenfalls aus thermoplastischem Material, und einem Dichtungsband 18 aus elastomerem Material aufgebaut.

Die Vorrichtung besteht aus einer Profilführung 2, einer oberen Profilanpressrolle 3 sowie einer oberen Profilantriebsrolle 4, einer Profilpositionierungswalze 5, ferner einer ausschwenkbaren Profilpositionierungs-und Verschlusswalze 5a sowie einer Profil-bzw. Rohrantriebsrolle 6. Mit Hilfe dieser Einrichtung wird das Profil 1 und das Verschlussprofil 19 sowie das Dichtungsband 18 auf die Innenseite einer stationären Lochblechtrommel 11 geführt und dort zum gewünschten Rohr gewickelt. Zu dieser Zuführeinrichtung gehört eine Führungsrolle für das Verschlussband 19, eine Führungsrolle für das Dichtungsband 18 sowie eine Umfangsrolle 9 für die weitere Führung des Profils 1. Die Lochblechtrommel 11 ist von einem Mantelzylinder 12 umgeben, wobei in den Spaltraum 13 zwischen diesen Teilen über einen Anschluss 14 Heissluft eingeblasen wird.

Ebenfalls zur Vorrichtung gehört eine Heissluftvorwärmdüse 14a, mit welcher das Profil 1 vorgewärmt und damit besser wickelbar wird.

Die Antriebs-und Führungsrollen 6-8 sind in einem Antriebswalzenständer 15 angeordnet, mit welcher über eine passende Einrichtung der Anpressdruck des Profils 1 gegen die Walzeninnenseite einstellbar ist.

Das Band wird unter einem Winkel α leicht - schräg in die Wickeltrommel geführt, so dass das Profil 1 zur Bildung des Rohres wendelförmig aufgewickelt werden kann. Das Profil 1 wird tangential in die Wickeltrommel eingeführt.

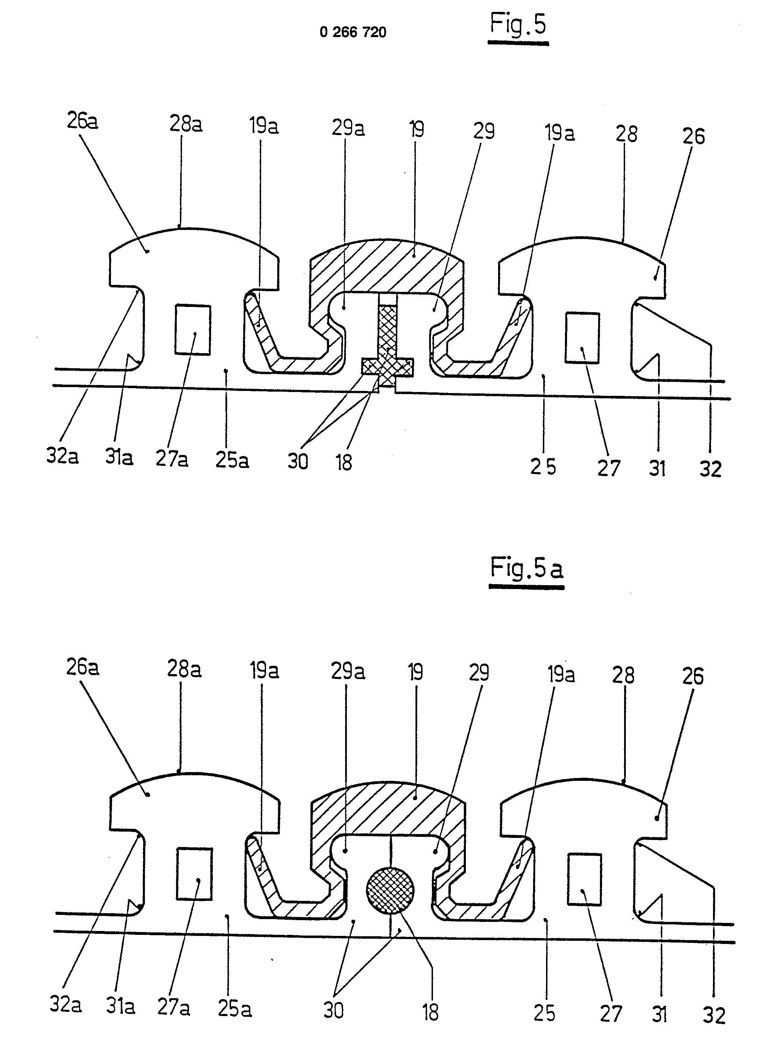

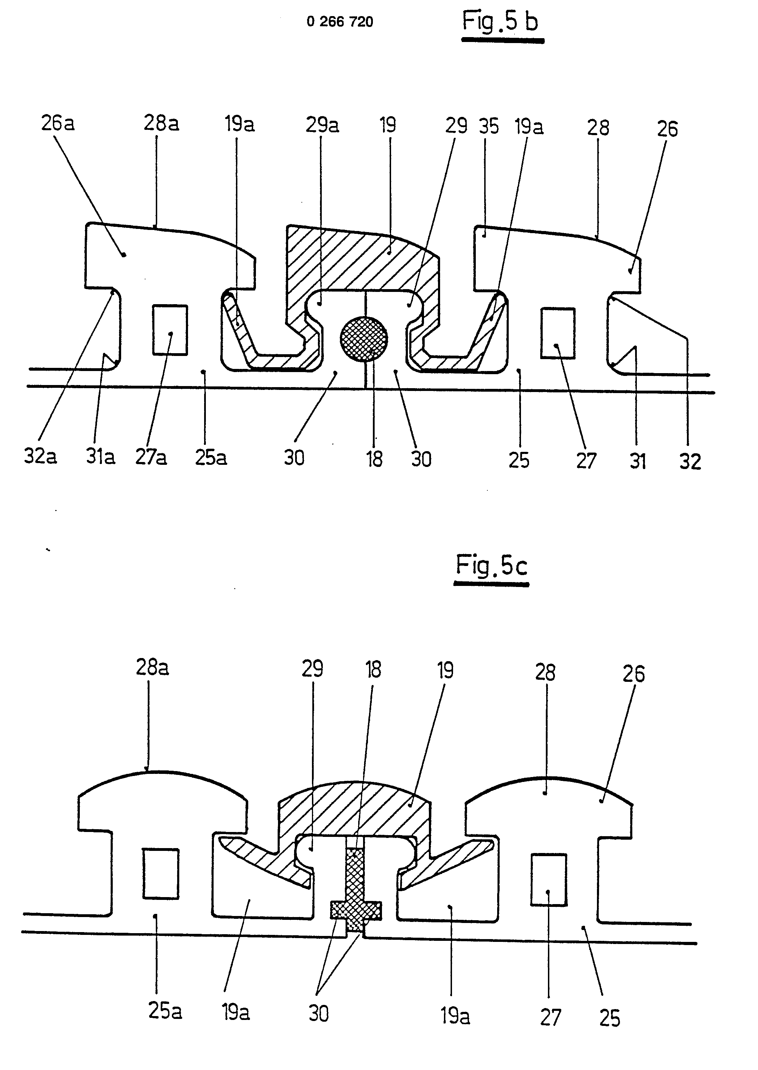

Fig. 5 sowie die Fig. 5a - 5c zeigen einen Schnitt durch die Nahtstelle von zwei aneinander anliegenden Profilabschnitten, wobei dort insbesondere die erfindungsgemässe Ausbildung des Verschlussbandes 19 gezeigt ist. Das zur Bildung des Rohres verwendete Profil 1 ist ein Band aus thermoplastischem Material mit parallelen Seitenkanten, wobei an diesen Seitenkanten nach aussen abstehende Flanschen 29, 29a vorgesehen sind, welche jeweils einen Endwulst aufweisen. Das U-förmige Verschlussband 19 übergreift mit seinen beiden Schenkeln von aussen klammerartig die Wulste der Flanschen 29, 29a, um das gebildete Rohr in seiner Form zu halten. Auf der Aussenfläche des Profils 1 ist wenigstens eine weitere längslaufende Rippe 28 bzw. 28a vorgesehen. Diese Rippe kann mit einem Hohlraum 27, 27a versehen sein, welcher zur Erhöhung der Steifigkeit der Rippe beiträgt.

Das Verschlussband 19 weist seitwärts abstehende elastische Lappen 19a auf, welche mit Anschlägen an den Seitenflanken der Rippen 28, 28a zusammenwirken, bzw. mit diesen zur Anlage gelangen, um das Verschlussband in allen Betriebszuständen in Wirklage zu halten. Die Anschläge liegen dabei auf der Rückseite von kopfartigen Verdickungen 26, 26a der genannten Rippen, d.h. die Lappen 19a liegen gegen die dort gebildeten Schultern an.

Zwischen aneinander stossenden Bandflanschen 29, 29a ist in sich gegenüberliegenden Nuten 30 ein elastomeres Dichtungsband 18 bzw. ein Dichtungsring 18 angeordnet. Auf diese Weise wird ein stabiles und dichtes Rohr gebildet.

Wie Fig. 5b zeigt, kann das Profil des Verschlussbandes und der Rippen 28, 28a des eigentlichen Bandes (Profil 1), eine konische Form aufweisen (beim gewickelten Rohr ergibt sich dadurch eine kegelstumpfartige Form), was den Vortrieb des gebildeten Rohres auf der Innenseite der Wickeltrommel erleichtert.

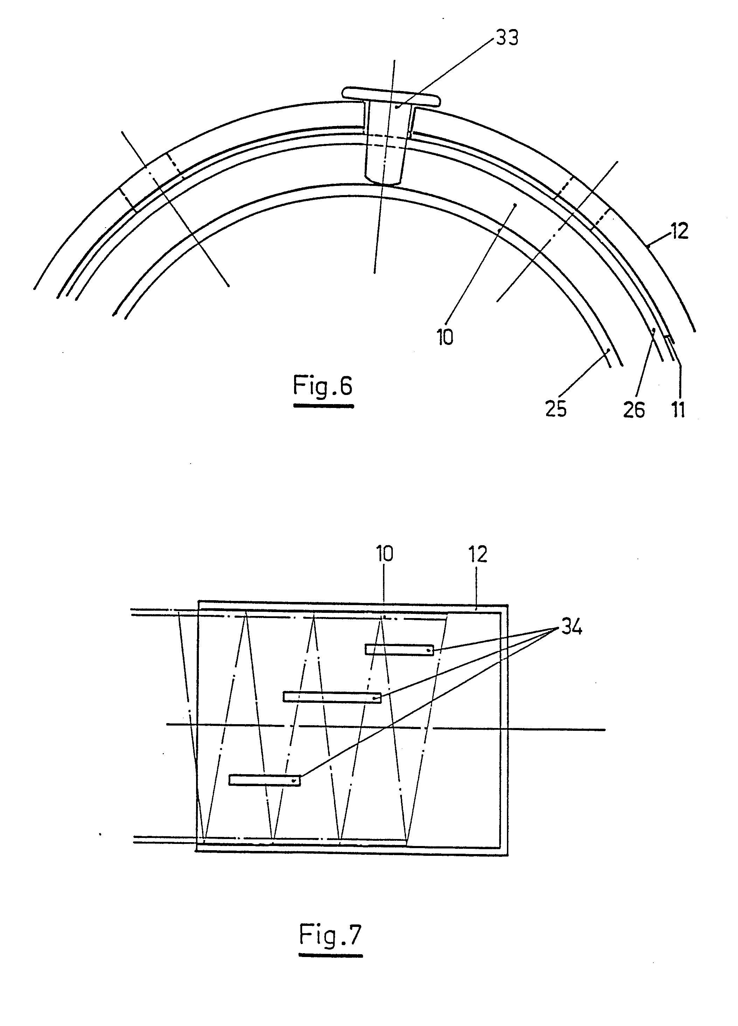

Die Fig. 6 und 7 der Zeichnung zeigen eine Wickeltrommel, bei welcher in Längsschlitzen 34 der Trommel bzw. des Mantels 12 eine Anzahl von Führungs-bzw. Rückhaltebolzen 33 nach innen ragen. Diese Bolzen 33 greifen dabei zwischen zwei Rippen 28 des gebildeten Rohres ein und können auf letzteres wirkende Axialkräfte aufnehmen, wie solche insbesondere dann auftreten können, wenn bei der in situ Herstellung des Rohres dieses gleichzeitig in eine zu reparierende Rohrleitung eingeschoben wird.

Nachstehend folgt noch eine kurze Beschreibung des Herstellungsablaufes bzw. weitere Angaben zur Erfindung.

Das Profil wird mittels der Profilführung 2 von der darauf gelagerten oberen Profilanpressrolle 3 und der Profilantriebsrolle 4 in Richtung der Positionierungswalzen 5, 5a und der Profil-und Rohrantriebsrolle 6 in die Lochblechtrommel 11 eingeführt. Die Profilanpressrolle 3 und die Profilpositionierungsrollen 5,5a weisen eine dem Profil 1 entsprechende strukturierte Oberfläche auf.

Die Achse der Profilführung 20 wird im Winkel $\alpha$ zur Achse der Lochblechtrommel 24 so eingestellt, dass das eingeschobene Profil 1 wendelförmig gewickelt wird, und der Anfang des gewickelten Profils 10 über die Umfangsprofilführungs-und Positionierungsrolle 9 neben dem fortwährend eingeschobenen Profil 1 zwischen den Rollen 5,5a und 6 an der Stelle A eintrifft. Die Lochblechtrommel 11 weist eine geringe Konizität, mit dem grösseren Durchmesser auf der Rohraustrittseite, auf. Damit wird das entstehende Spiralrohr in der vorgegebenen Richtung gebildet.

Der Durchmesser der Lochblechtrommel 11 im Wickelbereich A ergibt zwangsläufig den gewünschten Rohraussendurchmesser. Eine parallele Verschiebung der Wicklungen nach Anbringen des Verschlussbandes 19 ist ohne Kraftanwendung nicht möglich. Die Einstellung weiterer Rohrdurchmesser erfolgt durch rasches Auswechseln der kalibrierten Lochblechtrommeln 11.

Nachdem die erste Profillage gewickelt ist, und der Anfang des Bandes im Bereich A zwischen der Profilverschlusswalze 5a und der Profil-und Rohrantriebsrolle 6 über die Umfangsführungsrolle 9 zurückgeführt ist, werden das elastomere Dichtungsband 18 und das Verschlussband 19 in die entsprechenden Nuten 30 der Profilendstücke 29 eingelegt, die ausschwenkbare Profilverschlusswalze 5a in die Arbeitsposition eingerastet und der Normalbetrieb aufgenommen.

Die thermoplastischen Materialien sind temperaturabhängig, was ihr Biegsamkeits-und Sprödigkeitsverhalten beeinflusst. Die Rohre, die z.B. für die Renovation und Sanierung an Ort und Stelle in Schächten oder Baugruben produziert werden, sind den Witterungs-und Temperatureinflüssen besonders ausgesetzt. Die gestellten Ansprüche auf gute statische Eigenschaften (möglichst hohe Steifigkeit) der Renovationsrohre basieren auf der Steifigkeit der thermoplastischen Profile. Um steife Profile wickeln zu können, wird das Profil 1 in einem Vorlaufbereich C in die Profilführung 2 mit einer Vorwärmdüse 14a vorgewärmt. Der Vorlauf bereich C befindet sich unmittelbar vor der Lochblechtrommel 11.

Die Lochblechtrommel 11 ist umrundet von einem Mantelzylinder 12. Der Mantelzylinder 12 und die Lochblechtrommel 11 sind konzentrisch angeordnet. Der Raum 13 zwischen Trommel 11 und Mantel 12 dient der Heissluftverteilung auf den Umfang der Lochblechtrommel. Der Ring 13a trägt den Heissluftanschluss 14. Diese Anordnung erlaubt die Erwärmung der Wickeltrommel bzw. Lochblechtrommel, des Profils und insbesondere der gerippten Seite 26, die die Profil-bzw. die Rohrsteifigkeit am meisten beeinflusst.

Die Profil-und Rohrantriebsrolle 6 wird durch die Neigung der Profilführung 2 eingestellt und bildet somit, auf die Achse der Lochblechtrommel 24 bezogen, zusammen mit dem Einlaufwinkel $\alpha$ einen komplementären Winkel. Die von der Profildicke abhängige Anmpress-und Antriebskraft der Profil-und Rohrantriebsrolle 6 wird im Antriebswalzenständer 15 durch den Anpresskeil 16, den keilförmigen Antriebswalzenhalter 16a und die Einstellschraube 17 eingestellt. Mit dieser Vorrichtung werden die Anpress-und Antriebskräfte auf einen grösseren Abschnitt des Profils 1 und 10 der Länge der Antriebsrolle entsprechend verteilt und damit eine übermässige Beanspruchung des thermoplastischen Materials vermieden.

Die Beschaffenheit der Innenfläche der Lochblechtrommel 11 hat eine gleitende Oberfläche, die gleichzeitig wärmeleitend ist. Um ruckartige, diskontinuierliche Bewegungen des gewickelten Profils zu vermeiden, ist eine Beschichtung z.B. mit Teflon von Vorteil.

Bei Zunahme der gewickelten Rohrlänge und der damit verbundenen Gewichtszunahme sowie den gegebenenfalls während eines Renovationsvorganges auftretenden momentanen Stauungen, ist es vorteilhaft, die axialen Kräfte durch zusätzliche Profilführungen aufzunehmen. Diese Führungen, bestehend aus Bolzenstegen 33, werden in Längsschlitze 34 des Mantelzylinders 12 und der Lochblechtrommel 11 eingesteckt und greifen zwischen die Aussenrippen 28 des gewickelten Rohres ein.

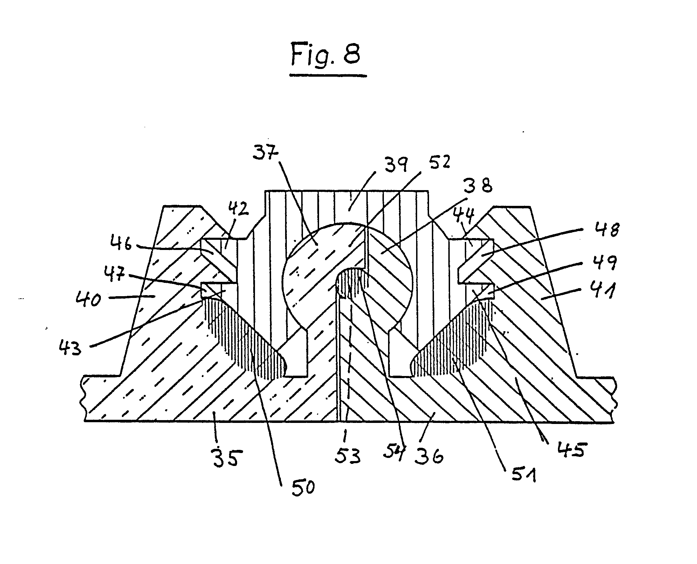

Fig. 8 der Zeichnung zeigt eine weitere Variante der Nahtverbindungsstelle zwischen zwei aneinander anliegenden Bandseitenkanten 35, 36 eines ein Wickelrohr bildenden Profilbandes. Auch hier sind an den Seitenkanten nach aussen abstehende Flanschen 37, 38 vorgesehen, welche jeweils einen Endwulst aufweisen. Ein U-förmiges Verschlussband 39 übergreift mit seinen Schenkeln klammerartig die Wulste der Flanschen 37, 38, um das gewickelte Rohr mechanisch zusammenzuhalten. Auf der Aussenseite des Profilbandes 35, 36 ist jeweils in Randnähe wenigstens eine weitere längsverlaufende Rippe 40 bzw. 41 vorgesehen.

Das Verschlussband 39 weist seitwärts abstehende elastische Lappen 42, 43 bzw. 44, 45 auf, welche an die oberen Seitenwände von Ausnehmungen 46, 47 bzw. 48, 49 in den Seitenflanken der Rippen 40, 41 zur Anlage gelangen. Die Oberseite der Lappen 42-45 verläuft parallel zur Bandfläche, während die Unterseite bezüglich der Bandfläche geneigt verläuft.

Die Unterseiten der Lappen 43 und 45 liegen dichtend gegen einen Bereich 50, 51 der Flanken der Längsrippen 40, 41 an, welcher aus einem Material besteht, das eine höhere elastische Verformbarkeit besitzt als das übrige Material der Rippen bzw. des Verschlussbandes. Damit wird eine gute Dichtwirkung gewährleistet. Der aus elastischerem Material bestehende Bereich wird durch Koextrusion mit dem übrigen Material hergestellt.

Ferner weist der Flansch 37 an seinem oberen Ende einen seitlich abstehenden Abschnitt 52 auf, welcher im zusammengefügten Zustand in eine entsprechende Ausnehmung 53 des Gegenflansches 38 eingreift. In einen längsverlaufenden Zwischenraum ragt ein Ansatz 54 an einem der Flansche, hier am Flansch 38, welcher aus einem im Vergleich zum übrigen Bandmaterial wesentlich elastischerem Material besteht (die Herstellung erfolgt durch Koextrusion der Materialien). Der Ansatz 54 bildet eine elastische Dichtung zwischen den beiden Flanschen 37 und 38.

## Ansprüche

1. Kunststoffrohr mit einer schraubenlinienförmig verlaufenden Naht, das aus einem Band mit parallelen Seitenkanten gebildet ist, wobei das Band entlang der Seitenkanten nach aussen abstehende, jeweils einen Endwulst aufweisende Flanschen aufweist und ein U-förmiges Verschlussband die Wulste von zwei aneinander anliegenden Flanschen mit seinen beiden Schenkeln von aussen klammerartig übergreift, um das Rohr in seiner Form zu halten, und wobei auf der Bandaussenfläche wenigstens eine weitere längsverlaufende Rippe vorgesehen ist, dadurch gekennzeichnet, dass entlang der beiden Schenkel des Verschlussbandes seitwärts abstehende elastische Lappen vorgesehen sind, welche mit Anschlägen an den Seitenflanken der jeweils benachbarten Bandrippe zur Anlage gelangen und damit das Verschlussband in Wirklage halten.

2. Kunststoffrohr nach Anspruch 1, bei welchem die Bandrippe mit einem äusseren Endflansch versehen ist, dadurch gekennzeichnet, dass die Seitenlappen des Verschlussbandes auf der Unter-bzw. Rückseite des Rippenflansches zur Anlage gelangen.

3. Kunststoffrohr nach Anspruch 1 oder 2, dadurch gekennzeichnet, dass die Seitenlappen vom freien Ende der Schenkel des Verschlussbandes nach aussen abstehen.

4. Kunststoffrohr nach Anspruch 1 oder 2, dadurch gekennzeichnet, dass die Seitenlappen aus der Seitenflanke der Schenkel des Verschlussbandes nach aussen abstehen.

5. Kunststoffrohr nach einem der Ansprüche 1-4, dadurch gekennzeichnet, dass die Seitenlappen ein durchgehendes oder unterbrochenes Band bilden.

6. Kunststoffrohr nach einem der Ansprüche 1-5, dadurch gekennzeichnet, dass die seitlich abstehenden Lappen in einem Winkel nach aussen bzw. oben geneigt verlaufen.

7. Kunststoffrohr nach einem der Ansprüche 1-6, dadurch gekennzeichnet, dass zwischen aneinanderstossenden Bandflanschen ein gegebenenfalls in sich gegenüberliegenden Nuten verlaufendes, vorzugsweise elastomeres Dichtungsband angeordnet ist.

8. Kunststoffrohr nach einem der Ansprüche 1-7, dadurch gekennzeichnet, dass das Profil des Verschlussbandes und der Rippen oben eine konische Form aufweist.

9. Verfahren zur Herstellung eines Kunststofrohres nach einem der Ansprüche 1-8, dadurch gekennzeichnet, dass ein mit mindestens einer längsverlaufenden Aussenrippe versehenes Band, an dessen parallelen Seitenkanten nach aussen abstehende, jeweils einen Endwulst aufweisende Flanschen vorgesehen sind, wendelförmig in Rohrform gewickelt wird, wobei die auf dem gewünschten Rohrdurchmesser an der Nahtstelle aneinanderstossenden Bandkanten gleichzeitig miteinander verbunden werden, indem von aussen ein U-förmiges Verschlussband über die Endwulste der Bandflanschen gelegt wird, um letztere klammerartig zu übergreifen und das Verschlussband mit seitwärts von seinen Schenkeln abstehenden Lappen gleichzeitig in den Seitenflanken der angrenzenden Bandrippe so zum Eingriff gebracht wird, dass der klammerartige Verschluss in Wirklage verbleibt.

10. Verfahren nach Anspruch 9, dadurch gekennzeichnet, dass vor dem Verschliessen der Naht mit dem Verschlussband ein vorzugsweise elastomeres Dichtungsband zwischen die aneinanderstossenden Bandkanten eingelegt wird.

11. Verfahren nach Anspruch 9 oder 10, dadurch gekennzeichnet, dass zur Bildung des Rohres ein thermoplastisches Bandmaterial verwendet wird, welches unmittelbar vor dem Wickelvorgang zwecks Erleichterung des Wickelvorganges und momentaner Verringerung der Steifigkeit einer Vorerwärmung unterzogen wird.

12. Verfahren nach einem der Ansprüche 9-11, dadurch gekennzeichnet, dass die zur Bildung des Rohres eingesetzten thermoplastischen Materialien während dem Wickelvorgang des Rohres auf einer gegenüber der Umgebung erhöhten Temperatur gehalten werden, beispielsweise durch Arbeiten in Heissluftatmosphäre.

13. Vorrichtung, geeignet zur Durchführung des Verfahrens nach einem der Ansprüche 9-12, gekennzeichnet durch eine stationäre Wickeltrommel, Zuführ-und Antriebsmitteln, um Bandmaterial unter einem bestimmten Winkel mit Bezug auf die Trommellängsachse auf die Innenseite der Wickeltrommel zu führen und das dabei geformte rohrförmige Gebilde in Richtung des Trommelaustrittes vorzuschieben, sowie durch Mittel, um die schraubenlinienförmige Naht zwischen anliegenden Bandseitenkanten zu verschliessen.

14. Vorrichtung nach Anspruch 13, dadurch gekennzeichnet, dass die Verschliessmittel eine Einrichtung umfassen, um ein Nahtverschlussband und gegebenenfalls ein Dichtungsband über die Bandflanschen bzw. zwischen diese zu legen.

15. Vorrichtung nach Anspruch 13 oder 14, dadurch gekennzeichnet, dass sich das Trommelinnere in Richtung der Austrittsöffnung leicht konisch öffnet.

16. Vorrichtung nach einem der Ansprüche 13-15, gekennzeichnet durch die eine der Wickeltrommel vorgeschaltete Einrichtung zur Vorerwärmung des Bandes.

17. Vorrichtung nach einem der Ansprüche 15-16, dadurch gekennzeichnet, dass die Wickeltrommel aus einem gelochten Zylinder besteht und von einem Mantel umgeben ist, und dass Mittel vorgesehen sind, um Heissluft in den Spaltraum zwischen Trommel und Mantel einzublasen.

18. Vorrichtung nach einem der Ansprüche 13-17, dadurch gekennzeichnet, dass die Wickeltrommel zur Herstellung von Rohren mit verschiedenen Durchmessern gegen Trommeln mit anderen Durchmessern austauschbar eingebaut ist.

19. Vorrichtung nach einem der Ansprüche 13-17, dadurch gekennzeichnet, dass am Umfang der Wickeltrommel eine Anzahl durch Längsschlitze von aussen nach innen in den Innenraum ragende Führungs-bzw. Rückhalteelemente angeordnet sind, welche beim gebildeten Rohr zwischen benachbarte Aussenrippen eingreifen, um auf das Rohr einwirkende Axialkräfte aufzunehmen.

20. Kunststoffrohr nach Anspruch 1, dadurch gekennzeichnet, dass in der dem Endflansch zugekehrten Seitenflanke der benachbarten Bandrippe wenigstens eine, vorzugsweise jedoch zwei längsverlaufende, sich seitwärts öffnende Ausnehmungen angeordnet sind, welche dazu vorgesehen sind, die von den Schenkeln des Verschlussbandes seitwärts abstehenden Lappen aufzunehmen und damit das Verschlussband in Wirklage zu halten.

21. Kunststoffrohr nach Anspruch 20, dadurch gekennzeichnet, dass jeder der seitwärts abstehenden Lappen zwei Flanken aufweist, von denen die obere, die zur Anlage an eine Seitenwand der Ausnehmung in der Längsrippe vorgesehen ist, im wesentlichen parallel zur Bandfläche und die andere, die zur Anlage an einen Bereich der Flanke der Längsrippe vorgesehen ist, bezüglich der Bandfläche geneigt verläuft.

22. Kunststoffrohr nach Anspruch 21, dadurch gekennzeichnet, dass der genannte Flankenbereich der Längsrippe aus einem Material besteht, welches im Vergleich zum übrigen Bandmaterial eine höhere elastische Verformbarkeit besitzt, um einen eingesetzten Lappen elastisch gegen die Seitenwand der Ausnehmung anzudrücken und gleichzeitig eine Dichtung zu bilden.

23. Kunststoffrohr nach einem der Ansprüche 1 bis 22, dadurch gekennzeichnet, dass der eine, einen Endwulst aufweisende Seitenflansch am oberen Ende einen von der Bandseitenkante seitwärts nach aussen abstehenden Abschnitt aufweist, welcher in eine entsprechende Ausnehmung am oberen Ende des benachbarten Endflansches, diesen unter Belassung eines längsverlaufenden Zwischenraumes teilweise übergreifend, hineinragt, wobei vom einen oder anderen Endflansch ein längsverlaufender Ansatz in den Zwischenraum ragt, um sich gegen den Gegenflansch anzulegen und eine Dichtung zu bilden.

24. Kunststoffrohr nach Anspruch 23, dadurch gekennzeichnet, dass der längsverlaufende Ansatz aus einem Material besteht, welches im Vergleich zum übrigen Bandmaterial eine höhere elastische Verformbarkeit besitzt.

0 266 720

Fig.1

Fig.2

Fig.3

Fig.4

Fig.5

0 266 720

Fig.5a

## Fig.5 b

## Fig.5c

Fig.6

Fig.7

# Fig. 8